# EUROPEAN PATENT APPLICATION

(11) **EP 3 342 639 A1**
(43) Date of publication of application: **04.07.2018**
(21) Application number: 17205987.5
(22) Date of filing: 07.12.2017
(51) Int. Cl.: B60Q 1/14

(54) **LEVER DEVICE**

(30) Priority: 28.12.2016 JP 2016255494
(71) Applicant: Valeo Japan Co., Ltd., Saitama 360-0193 (JP)
(72) Inventor: ITOKAWA, Masahiro, Tokyo 143-8521 (JP); AOKI, Yo, Tokyo 143-8521 (JP)
(74) Representative: Oppermann, Frank

(57) **Abstract**

A lever device 1 according to the invention comprises a movable component 3 including a pair of support arm portions 32, an operable knob 2 provided with an operable portion 24 in the base end side inserted between the pair of support arm portions 32, the operable portion 24 being supported by the pair of support arm portions 32 to be rotatable around an axis line X, and a fixed component 4 configured to assemble a polar board 5 and a cover 6 in a direction of an axis line Y perpendicular to the axis line X, the movable component 3 being supported to be rotatable around the axis line Y in the fixed component 4, wherein arc-shaped guide grooves 55, 65 to surround the axis line Y by a predetermined interval as viewed in the direction of the axis line Y are provided on opposing faces of each other of the polar board 5 and the cover 6, and a guide shaft 321 engaging to the guide groove 55 in the polar board 5-side and a guide shaft 322 engaging to the guide groove 65 in the cover 6-side are provided in the support arm portions 32. The lever device 1 improves assembling performance of an operable knob to a movable component.

## Description

### BACKGROUND OF THE INVENTION

### Field of the Invention

The present invention relates to a lever device for a vehicle.

### Description of the Related Art

Japanese Patent No. 4695310 discloses a lever device for a vehicle.

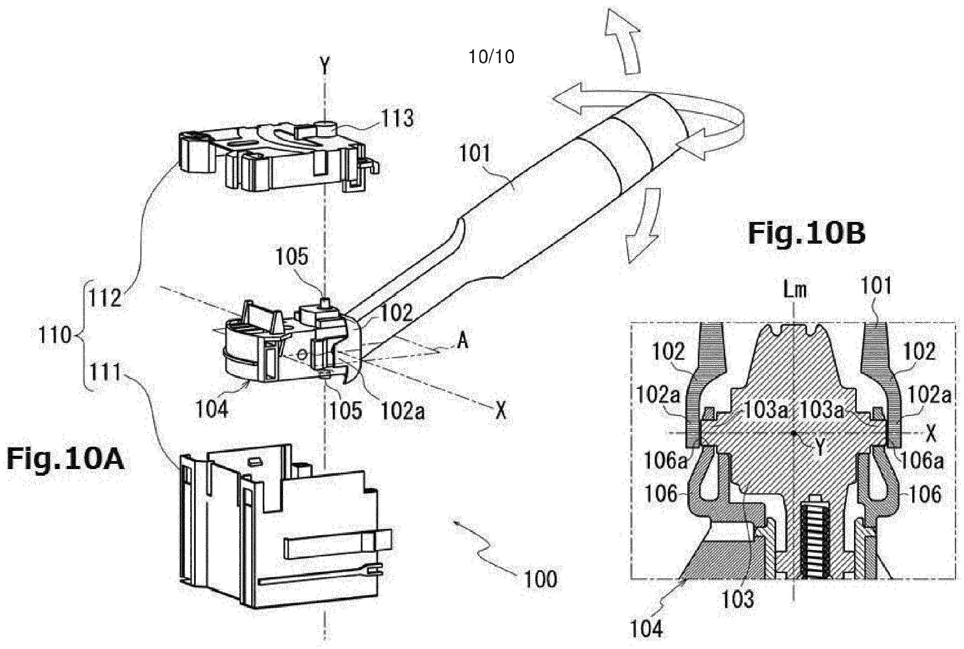

Figs. 10A and 10B are drawings explaining a lever device 100 according to a conventional example, wherein Fig. 10A is an exploded perspective view illustrating the lever device 100, and Fig. 10B is a cross sectional view by cutting a movable component 104 on plane A in Fig. 10A.

As illustrate in Figs. 10A and 10B, there is an example showing this type of lever devices 100, which is configured to rotate an operable knob 101 around an axis line X upon turning on/turning off a turn signal and rotate the operable knob 101 around an axis line Y perpendicular to the axis line X upon flashing.

Therefore the operable knob 101 is configured such that a base end portion 103 inserted in the movable component 104 is supported to be rotatable around the axis line X by the movable component 104, and the movable component 104 is supported to be rotatable around the axis line Y within a fixed component 110 formed by covering an upper opening of a polar board 111 with a cover 112.

The movable component 104 is provided with shaft-shaped projections 105 arranged upward and downward in a direction of the axis line Y for rotating the movable component 104 around the axis line Y. The polar board 111 and the cover 112 in the fixed component 110 are provided with cylindrical support portions 113 each having a thickness in the direction of the axis line Y to rotatably support the shaft-shaped projections 105 of the movable component 104.

As illustrated in Fig. 10B, the movable component 104 has a pair of support arm portions 106 to support the operable knob 101 to be rotatable around the axis line X.

The support arm portions 106 are provided with support holes 106a penetrating in the direction of the axis line X, and support shafts 103a projecting from both sides of the base end portion 103 in the direction of the axis line X are rotatably supported in the support holes 106a.

### SUMMARY OF THE INVENTION

Here, when the operable knob 101 is forcibly operated in a direction of rotating the movable component 104 around the axis line Y, the support arm portions 106 supporting the support shafts 103a in the operable knob 101-side are subjected to stress in a direction of causing the support arm portions 106 to be away from each other in the direction of the axis line X.

In addition, in a case where the movement of the support arm portions 106 in the direction of the axis line X is not restricted, the operable knob 101 possibly drops from the movable component 104.

Therefore in the lever device 100 according to the conventional example, protection portions 102 for protecting connecting portions between the operable knob 101 and the movable component 104 are provided with restriction portions 102a for restricting displacements of the support arm portions 106 in the direction of the axis line X.

Here, for assembling the base end portion 103 of the operable knob 101 to the movable component 104, it is necessary to engage the support shafts 103a of the base end portion 103 to the support holes 106a of the support arm portions 106.

Therefore it is necessary to separate the support arm portions 106 of the movable component 104 from each other in the direction of the axis line X to ensure a clearance for inserting the support shafts 103a of the base end portion 103 therebetween.

However, the protection portions 102 having the restriction portions 102a are formed to be integral with the operable knob 101.

Therefore in a case of trying to insert the base end portion 103 between the support arm portions 106 for assembling the base end portion 103 of the operable knob 101 to the movable component 104, the restriction portions 102a restrict the displacement of the support arm portions 106 in the direction of the axis line X.

Accordingly since the clearance for inserting the support shafts 103a of the base end portion 103 cannot be ensured sufficiently largely between the support arm portions 106, there is a problem with the assembling performance to the movable component in a case of the operable knob which is prevented from dropping.

Therefore there is a demand for preventing the operable knob from dropping from the movable component and improving the assembling performance of the operable knob to the movable component.

A lever device according to the present invention comprises:
a movable component including a pair of support arm portions;
an operable knob provided with a base end portion inserted between the pair of support arm portions, the base end portion being supported by the pair of support arm portions to be rotatable around a first axis line; and
a fixed component configured to assemble a polar board and a cover in a direction of a second axis line perpendicular to the first axis line, the movable component being supported to be rotatable around the second axis line in the fixed component, wherein
arc-shaped guide grooves to surround the second axis line by a predetermined interval as viewed in the direction of the second axis line are provided respectively on opposing faces of each other of the polar board and the cover, and
projections engaging to the guide groove in the polar board and the guide groove in the cover are provided in the pair of support arm portions.

According to the present invention, when the projections provided in the support arm portions are engaged to the guide grooves in the polar board side, the displacement of the support arm portions in the direction of the first axis line is restricted.

Thereby in the lever device in which the movable component is supported to be rotatable by the fixed component, the pair of the support arm portions are restricted from displacing in the direction of being away from each other in the direction of the first axis line.

Accordingly the operable knob the base end portion of which is supported by the pair of the support arm portions can be prevented from falling out of the movable component.

In addition, in the movable component prior to being supported by the fixed component, the pair of support arm portions are capable of displacing in the direction of the first axis line. Therefore the base end portion of the operable knob is inserted between the pair of support arm portions, thus making it possible to support the base end portion of the operable knob with the pair of support arm portions.

Accordingly the assembling performance at the time of assembling the operable knob to the movable component improves.

### BRIEF DESCRIPTION OF THE DRAWINGS

Other objects, features, and advantages of the present invention will become more apparent from the following detailed description made with reference to the accompanying drawings, in which like parts are designated by like reference numbers and in which:
Fig. 1A is a cross sectional view explaining a lever device according to an embodiment of the present invention;
Fig. 1B is a perspective view explaining part of the lever device;
Fig. 2 is a cross sectional view explaining a base end side of the lever device;
Fig. 3A is a plan view illustrating a cover of the lever device;
Fig. 3B is a perspective view illustrating the cover of the lever device;
Fig. 3C is an enlarged view illustrating a region A in Fig. 3A;
Fig. 4A is a plan view illustrating a polar board according to the embodiment of the present invention;
Fig. 4B is a perspective view illustrating the polar board;
Fig. 5 is an enlarged view illustrating an essential part of the polar board;
Fig. 6A is a plan view illustrating a movable board according to the embodiment of the present invention;
Fig. 6B is a perspective view illustrating the movable board;
Fig. 7A is a plan view illustrating the movable board;
Fig. 7B is a perspective view illustrating the movable board;
Fig. 8A is a cross sectional view of a tip side of the operable knob explaining an operation of the lever device;
Fig. 8B is a cross sectional view of the tip side of the operable knob explaining the operation of the lever device;
Fig. 8C is a cross sectional view of the tip side of the operable knob explaining the operation of the lever device;
Fig. 9A is a cross sectional view of a tip side of the operable knob explaining the operation of the lever device;
Fig. 9B is a cross sectional view of the tip side of the operable knob explaining the operation of the lever device;
Fig. 10A is an exploded perspective view illustrating a lever device according to a conventional example; and
Fig. 10B is a cross section view by cutting a movable component in the lever device according to the conventional example.

### DESCRIPTION OF THE PREFERRED EMBODIMENTS

Hereinafter, an explanation will be made of a lever device according to an embodiment of the present invention.

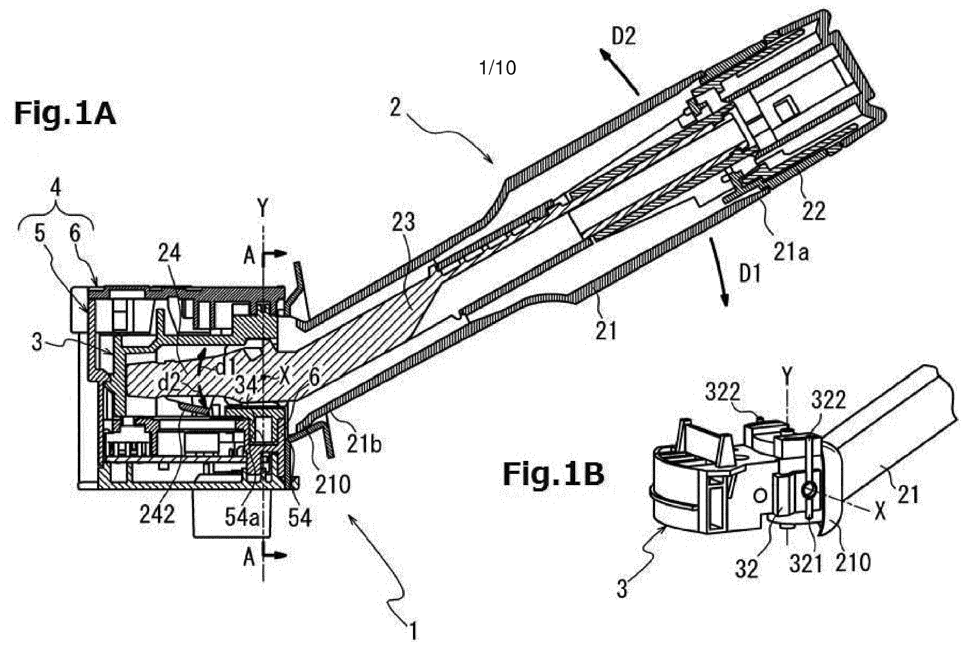

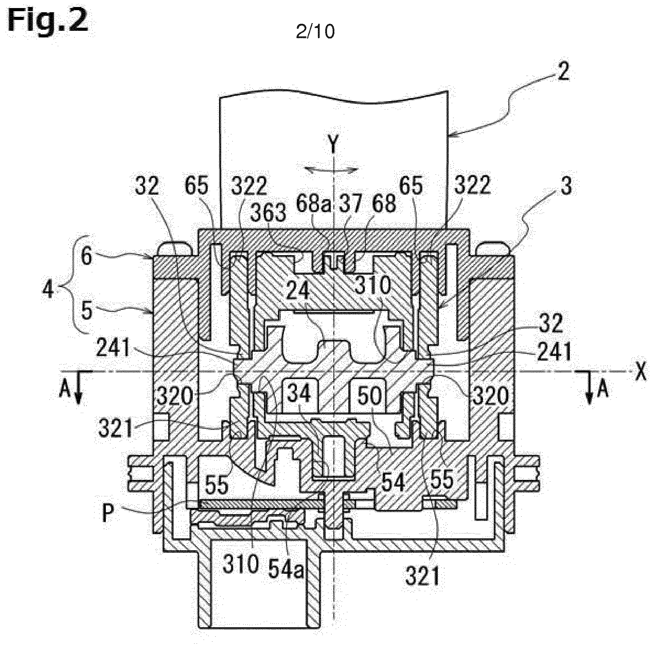

Figs. 1A and 1B are drawings explaining a lever device 1, wherein Fig. 1A is a cross sectional view by cutting away the lever device 1 along an operable knob 2 and Fig. 1B is a perspective view illustrating a tip side of the operable knob 2. Fig. 2 is a drawing explaining the lever device 1, and is a cross sectional view by cutting away the lever device 1 along line A-A in Fig. 1A.

As illustrated in Fig. 1A, the lever device 1 has the operable knob 2 that is operated by a user, and the operable knob 2 is provided with a rotational knob 22 in one end 21a-side of a cylindrical cover portion 21 in the longitudinal direction.

The operable knob 2 has a shaft member 23 connected integrally with the cover portion 21 in the inside of the cover portion 21.

An operable portion 24 (base end portion) in the base end side of the shaft member 23 projects from protection portions 210 provided in the other end 21b of the cover portion 21 and is inserted in a movable component 3.

As illustrated in Fig. 2, the movable component 3 has a pair of support arm portions 32, and the operable portion 24 inserted between the pair of support arm portions 32 is supported on the pair of support arm portions 32 to be rotatable around an axis line X (first axis line).

Therefore as illustrated in Fig. 1, when the operable knob 2 is operated in a D1 direction in the figure, the operable portion 24 displaces in a d1 direction in the figure in a peripheral direction around the axis line X, and when the operable knob 2 is operated in a D2 direction in the figure, the operable portion 24 displaces in a d2 direction in the figure in the peripheral direction around the axis line X.

Further, as illustrated in Figs. 1A, 1B and Fig. 2, the operable knob 2 is operated to rotate around an axis line Y as well perpendicular to the axis line X, and for enabling the rotation of the operable knob 2 around the axis line Y, the movable component 3 supporting the operable knob 2 is supported by a fixed component 4 accommodating the movable component 3 therein to be rotatable around the axis line Y (second axis line).

As illustrated in Fig. 2, the fixed component 4 accommodating the movable component 3 therein is formed by assembling a polar board 5 and a cover 6 that accommodate therein a print board P in a direction of the axis line Y.

### [Cover 6]

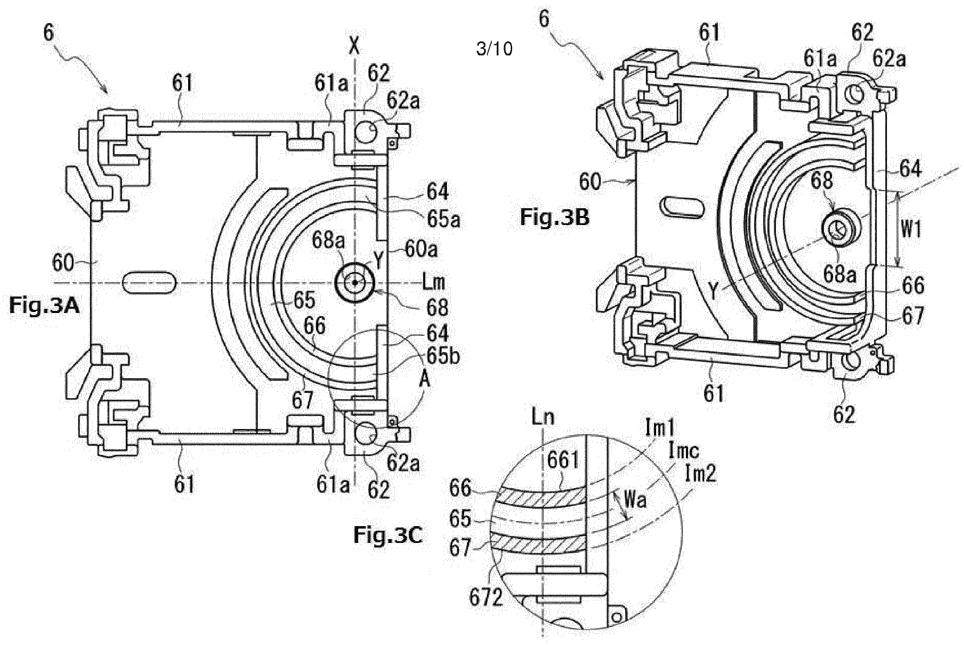

Figs. 3A to 3C are drawings explaining the cover 6, wherein Fig. 3A is a plan view illustrating the cover 6 as viewed from the polar board 5-side, Fig. 3B is a perspective view illustrating the cover 6 as viewed from the polar board 5-side, and Fig. 3C is an enlarged view of a region A in Fig. 3A.

It should be noted that in Fig. 3C, guide walls 66, 67 positioned in both sides of a guide groove 65 are illustrated by hatching for clarifying a position of the guide groove 65.

In a plan view, the cover 6 is provided with a ceiling plate portion 60 formed in a substantially rectangular shape, and side walls 61 are provided on both sides of the ceiling plate portion 60 in the width direction to extend to the polar board 5-side.

The side walls 61 are respectively provided with mounting portions 62 each having a screw hole 62a to be neighbored to one-end portions 61a of the side walls 61

The mounting portions 62 are provided to be symmetric about a virtual line Lm (third axis line) passing the center of the ceiling plate portion 60 in the width direction (upper-lower direction in Fig. 3A).

It should be noted that the virtual line Lm passes a crossing point between the axis line X and the axis line Y and is perpendicular to the axis line X and the axis line Y.

Ribs 64 are provided on the mounting portions 62 in the virtual line Lm-side. The ribs 64 extend in a direction of being closer to each other along a side edge 60a of the ceiling plate portion 60.

The ribs 64 are provided to be symmetric about the virtual line Lm and are opposed to each other with an interval W1 therebetween in a direction (direction of the axis line X) perpendicular to the virtual line Lm.

The guide groove 65 formed in an arc shape as viewed from the polar board 5-side is formed between a pair of guide walls 66, 67 in the inside of the ribs 64.

In the present embodiment, as illustrated in Fig. 3C, the guide walls 66, 67 respectively, as viewed from the polar board 5-side, have an inner periphery 661 and an outer periphery 672 that are positioned on virtual circles Im1, Im2 surrounding the axis line Y of the operable knob 2 by a predetermined interval, and a space between the guide walls 66, 67 is formed as the guide groove 65.

The guide groove 65 is formed in an arc shape along a virtual circle Imc surrounding the axis line Y by a predetermined interval, and is formed with the same width Wa over an entire length thereof in the peripheral direction around the axis line Y.

As illustrated in Fig. 3A, a one end 65a-side and the other end 65b-side of the guide groove 65 in the peripheral direction around the axis line Y cross the axis line X from one side to the other side in the direction of the virtual line Lm, and the one end 65a and the other end 65b are positioned in the other side of the axis line X in the direction of the virtual line Lm.

As viewed from the polar board 5-side, a cylindrical support tube 68 is disposed in a position intersecting with the virtual line Lm in an inner diameter side of the guide groove 65 of the ceiling plate portion 60.

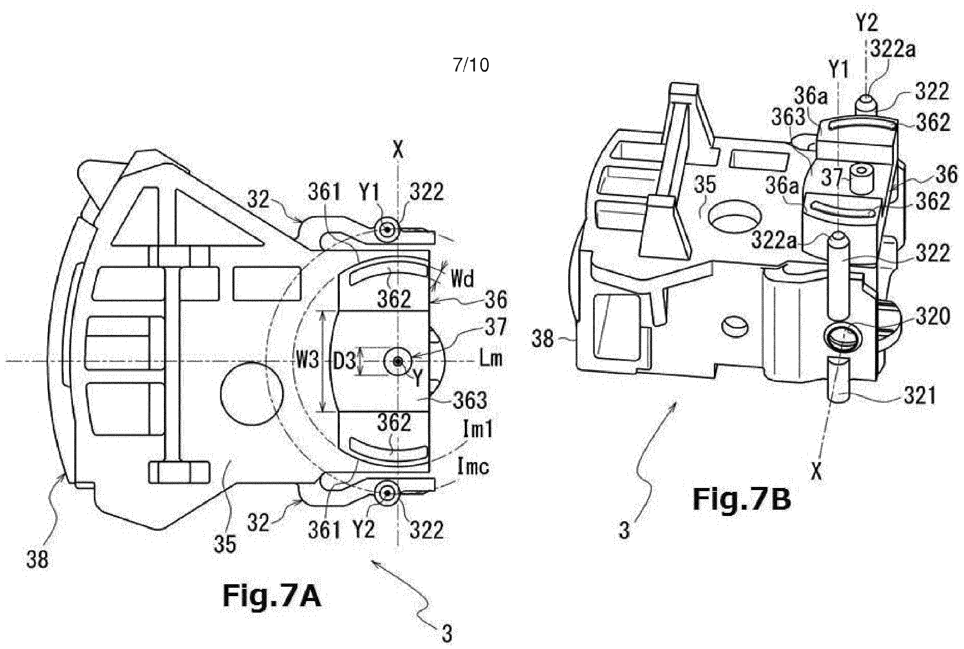

This support tube 68 is disposed to be concentric with the axis line Y as a rotational shaft of the operable knob 2, and a shaft portion 37 (refer to Figs. 7A and 7B) of the movable component 3 as described later is to be inserted in a support hole 68a of the support hole 68.

### [Polar board 5]

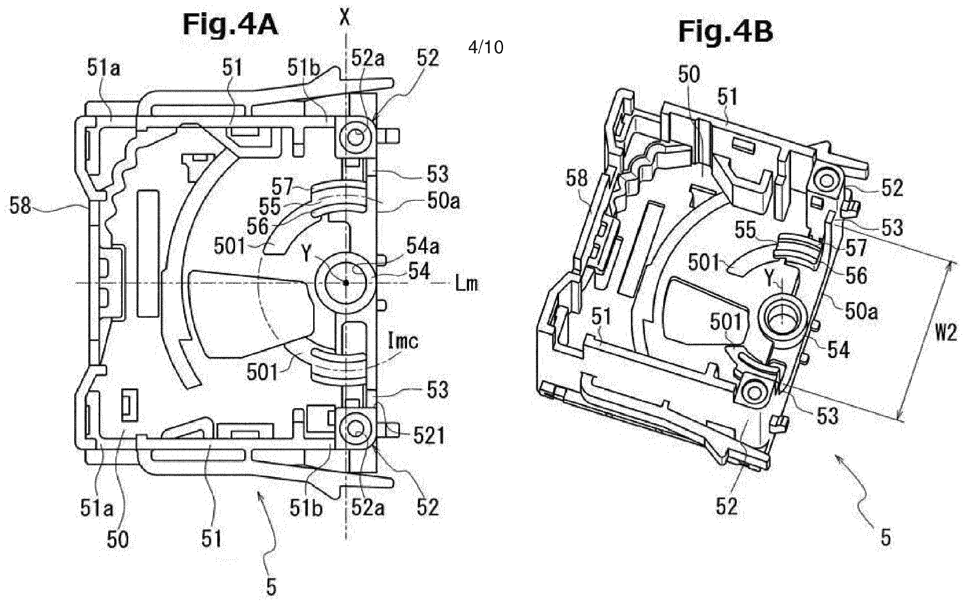

Figs. 4A and 4B are drawings explaining the polar board 5, wherein Fig. 4A is a plan view illustrating the polar board 5 as viewed from the cover 6-side and Fig. 4B is a perspective view illustrating the polar board 5 as viewed from the cover 6-side.

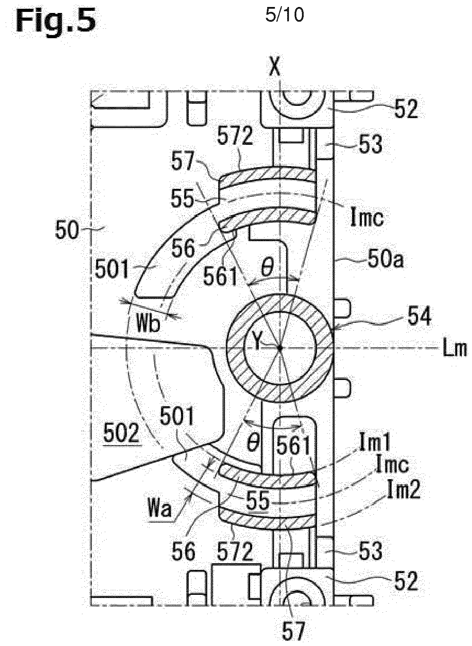

Fig. 5 is an enlarged view illustrating an essential part around guide grooves 55 and a support tube 54 in the polar board 5.

It should be noted that in Fig. 5, guide walls 56, 57 positioned in both sides of the guide groove 55 and the support tube 54 are illustrated by hatching for clarifying positions of the guide groove 55 and the support tube 54.

As illustrated in Figs. 4A and 4B, in a plan view as viewed from the cover 6-side, the polar board 5 has a partition wall portion 50 substantially in parallel to the above-mentioned ceiling plate portion 60, and side walls 51 are provided in both sides of the partition wall portion 50 in the width direction (upper-lower direction in Fig. 5A) to extend to the cover 6-side.

End portions 51a on one side of the side walls 51 are connected by a depth wall 58 extending to the cover 6-side, and on the partition wall portion 50, the movable component 3 is arranged to be accommodated in an inside region surrounded by the side walls 51 and the depth wall 58.

As illustrated in Fig. 4A, the side walls 51 are provided with boss portions 52 neighbored to end portions 51b on the other side, the boss portions 52 having screw holes 52a.

As viewed from the cover 6-side, the boss portions 52 are provided in positions symmetric about the virtual line Lm passing the center of the partition wall portion 50 in the width direction.

As viewed from the cover 6-side, ribs 53 extending to the virtual line Lm-side are provided in the virtual line Lm-side on the boss portions 52 along a side edge 50a of the partition wall portion 50.

The ribs 53 are disposed to be symmetric about the virtual line Lm and are opposed to each other with an interval W2 therebetween in a direction (direction of the axis line X) perpendicular to the virtual line Lm.

As viewed from the cover 6-side, the cylindrical support tube 54 is provided in a position intersecting with the virtual line Lm between the boss portions 52 in the partition wall portion 50.

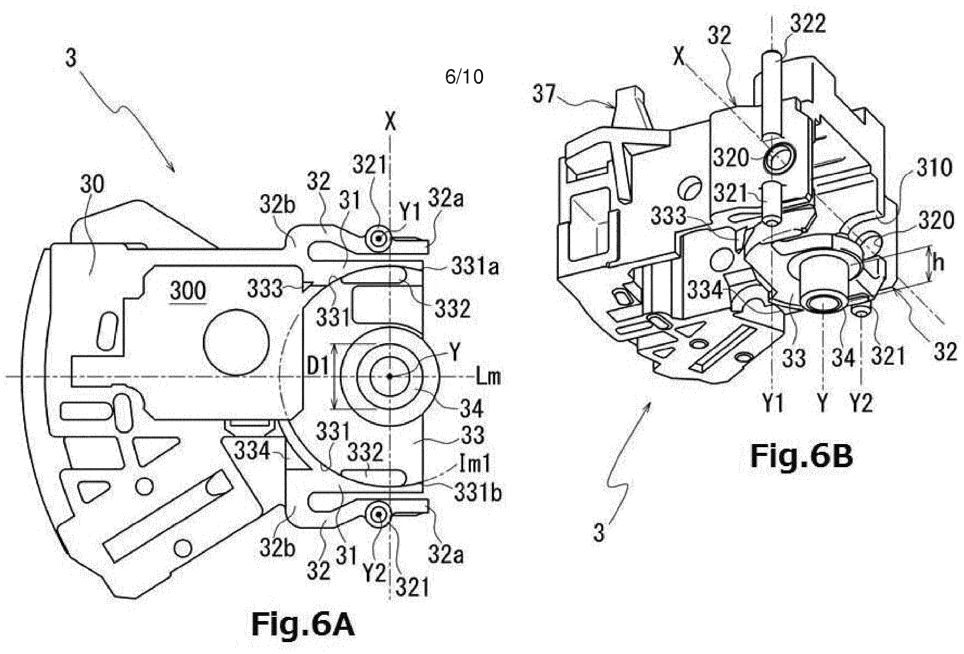

The support tube 54 is disposed to be concentric with the axis line Y as a rotational shaft of the operable knob 2, and a shaft portion 34 (refer to Figs. 6A and 6B) of the movable component 3 as described later is inserted in a support hole 54a of the support tube 54.

As illustrated in Fig. 5, the guide grooves 55 formed in an arc shape as viewed from the cover 6-side are formed between the pair of guide walls 56, 57 in the axis line Y-side (left side in the figure) of the ribs 53.

In the present embodiment, the guide walls 56, 57, as viewed from the cover 6-side, have respectively an inner periphery 561 and an outer periphery 572 positioned on virtual circles Im1, Im2 surrounding the axis line Y as the rotational shaft of the operable knob 2 by a predetermined interval, and a space between the guide walls 56, 57 is formed as the guide groove 55.

The guide grooves 55 each is formed in an arc shape along a virtual circle Imc surrounding the axis line Y by a predetermined interval, and each of the guide grooves 55 is formed with the same width Wa in the peripheral direction around the axis line Y.

The guide grooves 55 between the guide walls 56, 57 are provided in positions symmetric about the virtual line Lm, and each of them is formed in the same angle range θ in the peripheral direction around the axis line Y.

The guide grooves 55 are provided to cross the axis line X that is perpendicular to the virtual line Lm and passes the axis line Y. The guide grooves 55 each have a length of a direction along the virtual circle Imc that is longer in a region positioned in an insert hole 502-side of the partition wall portion 50 (left side in the figure) than in a region positioned in the opposite side (right side in the figure), on a basis of the axis line X.

Further, the partition wall portion 50 is provided with reinforcement ribs 501 on an extension line of the guide wall 56, and the reinforcement ribs 501 are formed by recessing the partition wall portion 50 to the cover 6-side.

The reinforcement ribs 501 each are formed in an arc shape along the virtual circle Im1, and have a radial width Wb from the virtual circle Imc to an inner diameter side of the virtual circle Im1 on a basis of the axis line Y.

### [Movable component 3]

Figs. 6A and Fig. 6B are drawings explaining the movable component 3, wherein Fig. 6A is a plan view as viewed from the polar board 5-side, and Fig. 6B is a perspective view as viewed from the polar board 5-side.

Figs. 7A and Fig. 7B are drawings explaining the movable component 3, wherein Fig. 7A is a plan view as viewed from the cover 6-side, and Fig. 7B is a perspective view as viewed from the cover 6-side.

As illustrated in Figs. 6A and 6B, in the movable component 3, side walls 31 are arranged on both sides across the virtual line Lm perpendicular to the axis line Y, and a support plate 33 having the cylindrical shaft portion 34 is provided to bridge over the side walls 31.

In the support plate 33, the shaft portion 34 is provided to be concentric with the axis line Y in a position where the virtual line Lm and the axis line Y intersect.

The shaft portion 34 projects from the support plate 33 to the polar board 5-side, and as viewed in the direction of the axis line Y, the shaft portion 34 is formed with an outer diameter D1 matching the support hole 54a (refer to Fig. 4A) of the support tube 54 of the polar board 5 as described before.

Arc-shaped sliding faces 331 formed by cutting out an outer periphery of the support plate 33 are formed in a region of the support plate 33 overlapping the side walls 31 as viewed in the direction of the axis line Y.

The sliding face 331 is provided along the virtual circle Im1 along the inner periphery 561 (refer to Fig. 5) of the guide wall 56 as described before except for a region overlapping an insert hole 300 of an operable element (unillustrated).

The sliding face 331 is provided to bridge over the axis line X perpendicular to the axis line Y and the virtual line Lm from one side to the other side of the axis line X, and one end 331a and the other end 331b of the sliding face 331 in the peripheral direction are positioned to be closer to the operable knob 2-side (right side in the figure) than the axis line X.

Sliding elements 332 are provided on opposing faces of the support plate 33 to the polar board 5 in positions intersecting with the axis line X, and the sliding elements 332 are arranged to be symmetric about the shaft portion 34.

The sliding elements 332 are provided along the sliding faces 331, and are formed in a tapered shape in which a radial thickness on the axis line Y is thinner as being away from the axis line X to the insert hole 300-side (left side in Fig. 6A).

The sliding elements 332 are arranged to abut on the reinforcement ribs 501 (refer to Fig. 5) provided in the partition wall portion 50 of the polar board 5 upon assembling the movable component 3 between the polar board 5 and the cover 6, and when the movable component 3 rotates around the axis line Y, the sliding elements 332 slide on part of the reinforcement ribs 501 of the partition wall portion 50.

A bottom wall portion 30 of the movable component 3 is provided with stoppers 333, 334 spaced by a predetermined interval from the sliding face 331. When the movable component 3 rotates largely around the axis line Y by an operation of the operable knob 2, the stoppers 333, 334 collide with the guide wall 56 (refer to Fig. 5) to block the rotation of the movable component 3 (operable knob 2).

As illustrated in Fig. 6A, the side walls 31 positioned in both sides of the bottom wall portion 30 in the width direction are provided with the support arm portions 32 extending outward of the side walls 31.

The support arm portions 32 extend outward from boundary portions between the insert hole 300 and the support plate 33 in the side walls 31, and then, extend along the side walls 31. Tips 32a of the support arm portions 32 reach positions over the above-mentioned axis line X to the operable knob 2-side (right side in the figure).

In the support arm portions 32, columnar guide shafts 321 are provided on outer peripheries of the support arm portions 32 in positions closer to base ends 32b of the support arm portions 32 than the axis line X.

The support arm portions 32 are supported on a cantilever basis by the side walls 31, and the tip 32a-sides provided with the guide shafts 321 are capable of resiliently displacing in the width direction of the bottom wall portion 30 (upper-lower direction in Fig. 6A).

As illustrated in Figs. 6A and 6B and in Fig. 2, support holes 320 penetrating through the support arm portions 32 in the thickness direction are provided in a substantially central part in the direction of the axis line Y in the support arm portions 32.

When engaging shafts 241 (refer to Fig. 2) extending from the operable portion 24-side of the operable knob 2 are engaged to the support holes 320, the operable knob 2 is rotatably supported around the axis line X in the movable component 3.

Therefore notches 310 for avoiding interference with the engaging shafts 241 are provided in regions of the side walls 31 positioned in the inside of the support arm portions 32 (refer to Fig. 6B).

As illustrated in Fig. 6B, the support arm portions 32 are provided with guide shafts 322 in the opposite side to the guide shafts 321 across the support holes 320. The guide shafts 322 and the guide shafts 321 are coaxially arranged on the axis lines Y1, Y2 in parallel to the axis line Y.

As illustrated in Figs. 7A and 7B, as viewed from the cover 6-side, the guide shafts 322 are positioned on a virtual circle Imc at the center of the axis line Y.

An upper wall portion 35 of the movable component 3 is provided with a guide portion 36 in a region between the guide shaft 322 and the guide shaft 322.

The guide portion 36 projects to the cover 6-side from the upper wall portion 35, and is provided in a range of bridging over the virtual line Lm and the axis line X.

Opposing faces 36a of the guide portion 36 to the cover 6 are flat faces perpendicular to the axis line Y, and arc-shaped sliding faces 361 formed by cutting out an outer periphery of the guide portion 36 are formed in regions of the guide portion 36 opposing the guide shafts 322.

The sliding faces 361 are provided along a virtual circle Im1 and along an inner periphery 661 (refer to Fig. 3C) of the guide wall 66 as described before, and each thereof is provided to bridge over the axis line X from one side to the other side of the axis line X.

The opposing faces 36a of the guide portion 36 to the cover 6 are provided thereon with sliding elements 362 in positions intersecting with the axis line X.

The sliding elements 362 project from the opposing faces 36a to the cover 6-side, and are provided along the sliding faces 361 in an inner diameter side (axis line Y-side) of the sliding faces 361.

The sliding elements 362 are formed in an arc shape as viewed in the direction of the axis line Y, and each thereof is formed with a substantially same width Wd in the peripheral direction around the axis line Y.

The sliding elements 362 are configured to abut on the ceiling plate portion 60 of the cover 6 upon assembling the movable component 3 between the polar board 5 and the cover 6.

In the present embodiment, the sliding elements 362 abut on regions of the ceiling plate portion 60 in the inside of the guide wall 66 (refer to axis line Y-side in Fig. 3A), and when the movable component 3 rotates around the axis line Y, the sliding elements 362 slide on the ceiling plate portion 60 in the axis line Y-side of the guide wall 66.

As illustrated in Figs. 7A and 7B, as viewed from the cover 6-side, a recessed groove 363 is formed in a region between the sliding elements 362. The recessed groove 363 is provided across the guide portion 36 from one side to the other side in the direction of the virtual line Lm, and has a predetermined width W3 in the direction of the axis line X.

The recessed groove 363 is provided with a cylindrical shaft portion 37 in a position where the virtual line Lm intersects with the axis line X, and this shaft portion 37 is provided to be concentric with the axis line Y.

The shaft portion 37 is formed with an outer diameter D3 approximately matching an inner diameter of a support hole 68a (refer to Fig. 3A) of a support tube 68, and the shaft portion 37 is configured to be inserted from the direction of the axis line Y in the support hole 68a of the support tube 68 in the above-mentioned cover 6 upon assembling the cover 6 and the polar board 5 (refer to Fig. 2).

Therefore the movable component 3 is configured to rotate in a state where the shaft portion 37 is supported by the support tube 68 in the cover 6-side upon rotating around the axis line Y, and the movable component 3 can rotate without being inclined to the axis line Y of the movable component 3.

Hereinafter, an explanation will be made of an operation of the lever device 1 as configured above.

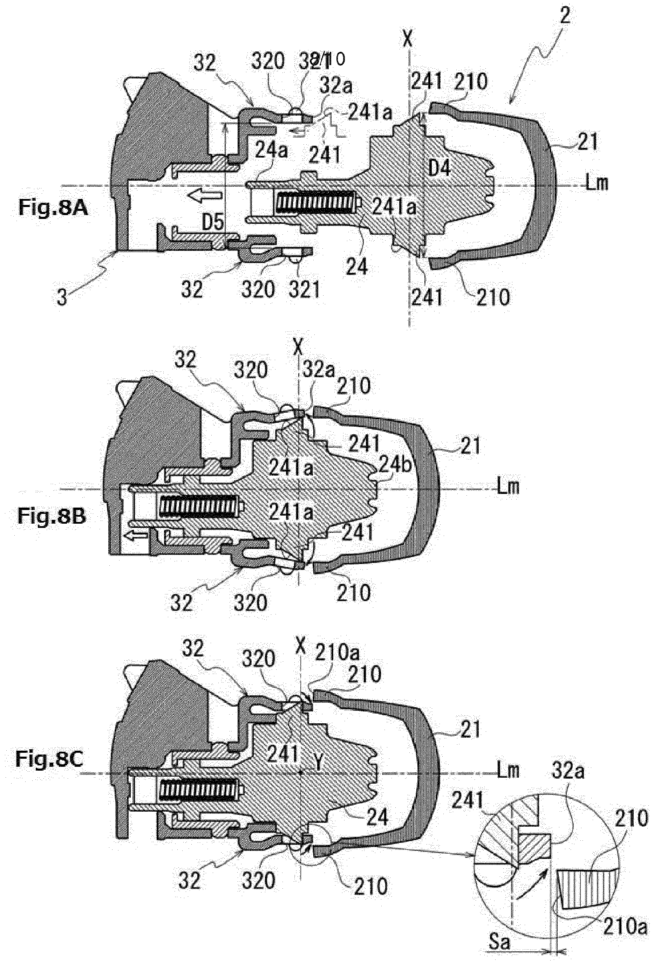

Figs. 8A to 8C are drawings explaining an assembling method of the operable knob 2 and the movable component 3 in the lever device 1, and illustrating the movable component 3 on a section by cutting the operable knob 2 and the movable component 3 along line A - A in Fig. 2 and only components in the operable knob 2-side.

Fig. 8A is a cross sectional view illustrating a state in the middle of inserting the operable portion 24 of the operable knob 2 between the pair of support arm portions 32 of the movable component 3.

Fig. 8B is a cross sectional view illustrating a state in the middle of inserting the engaging shafts 241 of the operable knob 2 between the pair of support arm portions 32 of the movable component 3.

Fig. 8C is a cross sectional view illustrating a state where the engaging shaft 241 of the operable knob 2 are engaged to the support holes 320 between the pair of support arm portions 32 to complete an assembly of the operable portion 24 of the operable knob 2 to the movable component 3.

As illustrated in Fig. 8A, a tip 24a-side of the operable portion 24 is inserted between the pair of support arm portions 32 of the movable component 3 from the shaft direction of the virtual line Lm upon assembling the operable portion 24 of the operable knob 2 to the movable component 3.

Here, an outer diameter D4 in the direction of the axis line X of sections in the operable portion 24 where the engaging shafts 241 are provided is set to an outer diameter greater than an interval D5 between the support arm portions 32 in the direction of the axis line X.

Therefore when the insert of the tip 24a-side of the operable portion 24 in between the pair of support arm portions 32 is advanced, the engaging shafts 241 of the operable portion 24 first make contact with the tips 32a of the support arm portions 32.

Here, the engaging shafts 241 are respectively provided with inclination faces 241a in the insert direction side (the left side in the figure) of the operable portion 24, and the inclination face 241a is inclined in a direction where the outer diameter D4 is smaller toward the support arm portion 32 (toward the left side in the figure).

Therefore the tip 32a-sides of the support arm portions 32 are pushed by the inclination faces 241a to displace in a direction of widening a separation distance (interval D5) of each other.

As a result, the engaging shafts 241 of the operable portion 24 resiliently deform the support arm portions 32 and are inserted in between the support arm portions 32 (refer to Fig. 8B).

Here, a base end 24b-side of the operable portion 24 (connecting portion side to the shaft member 23 (refer to Fig. 1B) is covered with the protection portion 210 formed to be integral with the tubular cover portion 211. The protection portion 210 is not provided with the restriction portion 102a (refer to Fig. 10) as in a case of the lever device 100 according to the conventional example, and in the operable portion 24, the engaging shaft 241 is provided in a region of the cover portion 21 projecting outward of the protection portion 210.

Therefore since the members (cover portion 21 and protection portion 210) in the operable knob 2-side are not positioned outside in the direction of the axis line X in the tips 32a-sides of the support arm portions 32, the tips 32a-sides of the support arm portions 32 are not restricted from displacing in a direction of being away from each other.

Therefore the operable knob 2 can smoothly insert the operable portion 24 in between the support arm portions 32 until a position (refer to Fig. 8C) where the engaging shafts 241 of the operable portion 24 are engaged to the support holes 320 of the support arm portions 32.

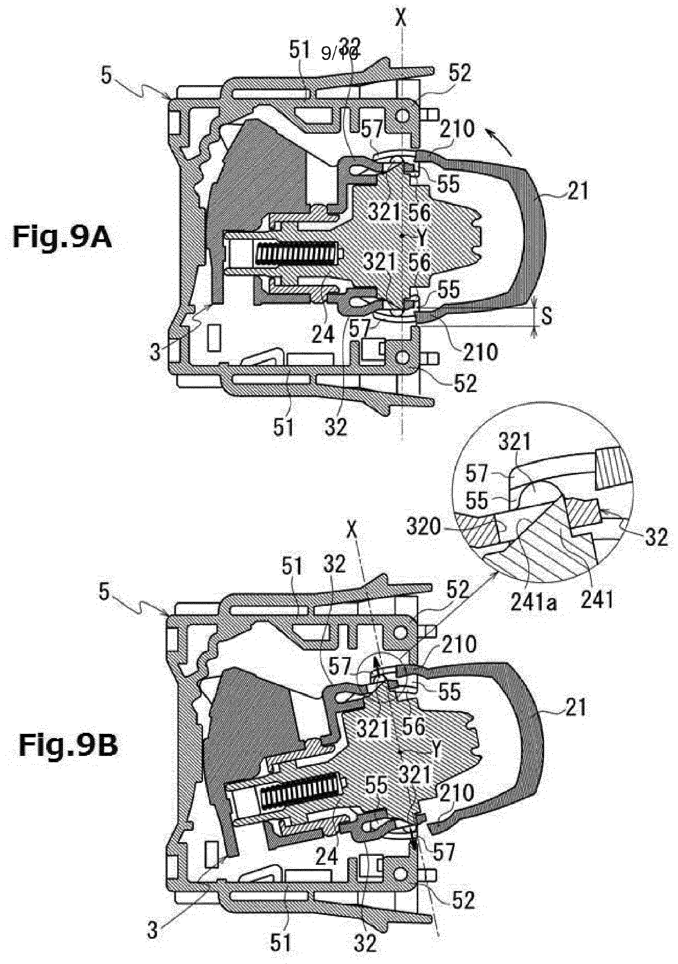

Figs. 9A and 9B are drawings explaining a displacement of the movable component 3 at the time the operable knob 2 in the lever device 1 is operated, and corresponding to the cross sectional view taken in line A - A in Fig. 2.

In a state where the movable component 3 is assembled between the polar board 5 and the cover 6, the guide shafts 322 extending from the movable component 3 to the cover 6-side are positioned in the guide groove 65 of the cover 6 (refer to Fig. 2). In addition, the shaft portion 37 projecting from the movable component 3 to the cover 6-side is positioned in the support hole 68a of the support tube 68 in the cover 6.

Further, the guide shafts 321 extending from the movable component 3 to the polar board 5-side are positioned in the guide grooves 55 of the polar board 5, and the shaft portion 34 extending from the movable component 3 to the polar board 5-side is positioned in the support hole 54a of the support tube 54 in the polar board 5 (refer to Fig. 2).

The guide grooves 55, 65 each are, as described before, provided along the virtual circle Imc surrounding the axis line Y by predetermined intervals. Therefore when the movable component 3 rotates around the axis line Y by an operation of the operable knob 2, the guide shaft 321 extending from the movable component 3 displaces in the peripheral direction around the axis line Y along the guide groove 55, and the guide shafts 322, 323 displace in the peripheral direction around the axis line Y along the guide groove 65.

Further, the displacement of the support arm portions 32 in the direction of being away from each other in the direction of the axis line X is restricted by the guide shafts 321, 322 engaged to the guide groove 65 in the cover 6-side and the guide groove 55 in the polar board 5-side (refer to Fig. 2 and Figs. 9A and 9B).

For example, in a case of Figs. 9A and 9B, the guide shaft 321 is engaged to the guide groove 55 in the polar board 5-side to cause the support arm portions 32 to be incapable of displacing in the direction of being away from each other in the direction of the axis line X

Therefore even if the operable knob 2 is forcibly operated in the direction of rotating the movable component 3 around the axis line Y, the support arm portions 32 can be prevented from displacing in the direction of being away from each other in the direction of the axis line X.

As a result, since the engaging shafts 241 of the operable portion 24 do not drop from the support holes 320 of the support arm portions 32 by widening the clearance between the support arm portions 32, the operable portion 24 of the operable knob 2 can be prevented from being separated and dropping from the movable component 3.

Accordingly it is not necessary to provide the restriction portion 102a for restricting the displacement of the support arm portion 106 in the protection portion 102 of the operable knob 101 as in a case of the lever device 100 according to the conventional example.

Therefore since it is not necessary to ensure the clearance for inserting the restriction portion 102a between the fixed component 110 and the movable component 104, it is possible to narrow the width of the lever device 1 in the direction of the axis line X by the amount corresponding to eliminating the clearance.

As described above, in the present embodiment,
(1) the lever device 1 comprises:
   the movable component 3 including the pair of support arm portions 32;
   the operable knob 2 that is provided with the operable portion 24 in the base end side inserted between the pair of support arm portions 32, the operable portion 24 being supported by the pair of support arm portions 32 to be rotatable around the axis line X (first axis line); and
   the fixed component 4 that is configured to assemble the polar board 5 and the cover 6 in the direction of the axis line Y (second axis line) perpendicular to the axis line X, the movable component 3 being supported to be rotatable around the axis line Y in the fixed component 4, wherein
   the arc-shaped guide grooves 55, 65 to surround the axis line Y by a predetermined interval as viewed in the direction of the axis line Y are provided on the opposing faces of each other of the polar board 5 and the cover 6, and
   the guide shaft 321 (projection) engaging to the guide groove 55 in the polar board 5-side and the guide shaft 322 (projection) engaging to the guide groove 65 in the cover 6-side are provided in the support arm portions 32.
   With this configuration, by the engagement of the guide shafts 321, 322 provided in the support arm portions 32 to the guide groove 55 in the polar board 5-side and to the guide groove 65 in the cover 6-side respectively, the displacement of the support arm portions 32 in the direction of being away from each other in the direction of the axis line X is restricted (refer to Fig. 2 and Figs. 9A and 9B).
   Therefore even if the operable knob 2 is forcibly operated in the direction of rotating the movable component 3 around the axis line Y, the support arm portions 32 can be prevented from being deformed in the direction of being away from each other in the direction of the axis line X and the operable portion 24 of the operable knob 2 can be prevented from being separated and dropping from the support arm portions 32 in the movable component 3.
   In the movable component 3 before being supported by the fixed component 4, the support arm portions 32 can displace in the direction of the axis line X (direction of widening the interval of each other). Therefore by inserting the operable portion 24 of the operable knob 2 in between the support arm portions 32, the operable knob 2 can be supported to be rotatable in the support arm portions 32 in the movable component 3. Accordingly the assembling performance upon assembling the operable knob 2 to the movable component 3 improves.
   Further, it is not necessary to provide the restriction portion (for example, refer to the restriction portion 102a in Figs. 10A and 10B) for restricting the displacement of the support arm portions 32 in the protection portion 210 of the operable knob 2.
   In a case of providing the restriction portion 102a, it is necessary to provide a clearance for inserting the restriction portion 102a between the fixed component 4 and the movable component 3. On the other hand, in a case of the present application, since there is no necessity for a component corresponding to the restriction portion, for example, in a case of Figs. 9A and 9B, it is not necessary to widen a clearance S between the boss portion 52 and the support arm portion 32. Accordingly it is possible to narrow the width of the lever device 1 in the direction of the axis line X by the amount corresponding to no necessity for widening the clearance S.
(2) The operable portion 24 of the operable knob 2 in the base end side is provided with the engaging shafts 241 (shaft-shaped projections) projecting along the axis line X on both the sides in the direction of the axis line X,
   the support arm portions 32 are respectively provided with the support holes 320 that rotatably support the engaging shafts 241 to penetrate through the support arm portions 32 in the direction of the axis line X, and
   the engaging shafts 241 are respectively provided with the inclination faces 241a in the insert side (left side in Figs. 8A to 8C) upon inserting the operable portion 24 in between the pair of support arm portions 32 to displace the pair of support arm portions 32 in the direction of being away from each other in the direction of the axis line X.
   With this configuration, it is possible to ensure the clearance for inserting the engaging shafts 241 of the operable portion 24 between the support arm portions 32 by displacing the support arm portions 32 in the direction of being away from each other in the direction of the axis line X upon inserting the operable portion 24 in between the support arm portions 32.
   The operable knob 2 can smoothly insert the operable portion 24 in between the support arm portions 32 until a position (refer to Fig. 8C) where the engaging shafts 241 of the operable portion 24 are engaged to the support holes 320 of the support arm portions 32.
   Accordingly the assembling performance upon assembling the operable knob 2 to the movable component 3 improves.
(3) The operable knob 2 includes:
   the tubular cover portion 21; and
   the shaft member 23 that is connected to the cover portion 21 in the inside of the cover portion 21 and is provided with the operable portion 24 in the base end side projecting from the cover 21,
   the engaging shafts 241 are provided in the sections projecting from the cover portion 21 (protection portion 210) in the operable portion 24, and
   the tip 210a of the cover portion 21 (protection portion 210) and the tip 32a of the support arm portion 32 are provided with an interval Sa therebetween in the direction of the virtual line Lm along the insert direction of the operable portion 24 (refer to Fig. 8C).
   With this configuration, since the members (cover portion 21 and protection portion 210) in the operable knob 2-side are not positioned in the tip 32a-side of the support arm portion 32 outside in the direction of the axis line X, the tips 32a-sides of the support arm portions 32 are not restricted from displacing in the direction of being away from each other.
   Therefore the operable knob 2 can displace the support arm portions 32 in the direction of being away from each other upon inserting the operable portion 24 in between the support arm portions 32.
   Accordingly it is possible to smoothly insert the operable portion 24 in between the support arm portions 32 until the position (refer to Fig. 8C) where the engaging shafts 241 of the operable portion 24 are engaged to the support holes 320 of the support arm portions 32.
(4) The guide grooves 55 of the polar board 5 are formed between the pair of guide walls 56, 57 formed in an arc shape as viewed in the direction of the axis line Y, the guide groove 65 of the cover 6 is formed between the pair of guide walls 66, 67 formed in an arc shape as viewed in the direction of the axis line Y, and
   the guide grooves 55, 56 are, as viewed in the direction of the axis line Y, provided along the virtual circle Imc at the center of the axis line Y.
   With this configuration, the guide shafts 321, 322 of the support arm portions 32 are supported by the guide grooves 55, 56 formed between the polar board 5 and the cover 6 in the direction of the axis line Y.
   Therefore the support arm portions 32 are restricted from displacing in the direction of being away from each other in the direction of the axis line X.
   Accordingly even if the operable knob 2 is forcibly operated in the direction of rotating the movable component 3 around the axis line Y, the operable portion 24 of the operable knob 2 is prevented from being separated and dropping from the movable component 3 with the deformation of the support arm portions 32 in the direction of the axis line X.
(5) The guide groove 55 in the polar board 5-side as viewed in the direction of the axis line Y includes two guide grooves that are arranged in a positional relation to be symmetric about the virtual line Lm,
   each of the guide grooves 55 in the polar board 5-side is provided to bridge over the axis line X from the one side to the other side in the direction of the virtual line Lm, and is provided in the same angle range θ (Fig. 5) in the peripheral direction around the axis line Y, and
   the guide shafts 321 that are provided in the support arm portions 32 and are engaged to the guide grooves 55 in the polar board 5-side are positioned on the virtual circle Imc in a positional relation to be symmetric about the virtual line Lm in the one side (lower side in Fig. 6A) and the other side (upper side in Fig. 6A) of the virtual line Lm as viewed in the direction of the axis line Y.
   With this configuration, since the displacement in the direction of the axis line X of the support arm portion 32 positioned in the one side across the virtual line Lm and the displacement in the direction of the axis line X of the support arm portion 32 positioned in the other side can be prevented equally, it is possible to appropriately prevent occurrence of the event that the operable portion 24 drops from between the support arm portions due to the deformation of the support arm portions 32.
(6) As viewed in the direction of the axis line Y, in the support arm portion 32 positioned in one side of the virtual line Lm and in the support arm portion 32 positioned in the other side, the guide shaft 322 engaged to the guide groove 65 in the cover 6-side and the guide shaft 321 engaged to the guide groove 55 in the polar board 5-side are positioned on the common axis lines Y1, Y2, and the axis line Y1 and the axis line Y2 are symmetric about the axis line Y and are in parallel with each other (refer to Figs. 6A. 6B).
   With this configuration, the movable component 3 can be prevented from being inclined to the axis line Y, while it is possible to rotate the movable component 3 around the axis line Y.
   In addition, even if the operable knob 2 is forcibly operated in the direction of rotating the movable component 3 around the axis line Y, the support arm portion 32 positioned in the one side of the virtual line Lm and the support arm portion 32 positioned in the other side are not twisted or deformed in the direction of the axis line Y. Therefore the operable portion 24 of the operable knob 2 does not separate or drop from the movable component 3.
   Further, upon assembling the cover 6 to the polar board 5, the guide shafts 321 provided in the support arm portions 32 resiliently abut on the inner periphery of the guide wall 57 in the polar board 5-side, and the guide shafts 322 provided in the support arm portions 32 resiliently abut on the inner periphery of the guide wall 67 in the cover 6-side.
   Particularly as viewed in the direction of the axis line Y, since the guide shafts 321, 322 are positioned in close proximity to the axis line X in the support arm portion 32 positioned in the one side and in the support arm portion 32 positioned in the other side, chattering of the movable component 3 in the direction of the axis line X can be preferably prevented.
(7) In the support arm portions 32, the guide shaft 322 engaged to the guide groove 65 in the cover 6-side and the guide shaft 321 engaged to the guide groove 55 in the polar board 5-side are provided to be spaced from each other in the directions of the axis line Y1 and the axis line Y2 in parallel with the axis line Y, and
   in the support arm portions 32, the support hole 320 of each of the engaging shafts 241 provided in both the sides of the operable portion 24 of the operable knob 2 is provided in the region between the guide shaft 322 engaged to the guide groove 65 in the cover 6-side and the guide shaft 321 engaged to the guide groove 55 in the polar board 5-side.

With this configuration, when the operable knob 2 is forcibly operated in the direction of rotating the movable component 3 around the axis line Y, the support arm portions 32 supporting the engaging shafts 241 in the operable knob 2-side are subjected to stress in the direction of causing the support arm portions 32 to be away from each other in the direction of the axis line X.

Here, in a case where the movement of the support arm portions 32 in the direction of causing the support arm portions 32 to be away from each other in the direction of the axis line X is not restricted, the operable knob 2 possibly drops from the movable component 3.

In the lever device 1 according to present embodiment, the displacement of the support arm portions 32 in the direction of the axis line X is restricted by the guide shafts 321, 322 and the guide grooves 55, 65 engaging to the guide shafts 321, 322. Therefore it is possible to appropriately prevent occurrence of the above event.

In addition, according to the conventional lever device 100, for preventing the occurrence of the above event, it is necessary to add components or shapes for preventing deformation of the support wall of the engaging shaft (rotational shaft) in the operable knob side, for example but in the lever device 1 according to the present embodiment, it is not necessary to add the above components and shapes.

While only the selected embodiment has been chosen to illustrate the present invention, it will be apparent to those skilled in the art from this disclosure that various changes and modifications can be made therein without departing from the scope of the invention as defined in the appended claims. Furthermore, the foregoing description of the embodiment according to the present invention is provided for illustration only, and not for the purpose of limiting the invention as defined by the appended claims and their equivalents.

### DESCRIPTION OF REFERENCE NUMERALS

1 Lever device
2 Operable knob
21 Cover portion
210 Protection portion
22 Rotational knob
23 Shaft member
24 Operable portion (base end portion)
241 Engaging shaft
241a Inclination face
3 Movable component
30 Bottom wall portion
31 Side wall
32 Support arm portion
321, 322 Guide shaft
33 Support plate
331 Sliding face
332 Sliding element
333, 334 Stopper
34 Shaft portion
35 Upper wall portion
36 Guide portion
361 Sliding face
362 Sliding element
4 Fixed component
5 Polar board
50 Partition wall portion
51 Side wall
53 Rib
54 Support tube
54a Support hole
55 Guide groove
56 Guide wall
561 Inner periphery
57 Guide wall
572 Outer periphery
58 Depth wall
6 Cover
60 Ceiling plate portion
61 Side wall
64 Rib
65 Guide groove
66 Guide wall
661 Inner periphery
67 Guide wall
672 Outer periphery
Im1, Im2 Virtual circle
Imc Virtual circle
Lm Virtual line (third axis line)
P Print board
X Axis line (first axis line)
Y Axis line (second axis line)
Y1, Y2 Axis line

## Claims

1. A lever device comprising:
a movable component (3) including a pair of support arm portions (32);
an operable knob (2) that is provided with a base end portion (24) inserted between the pair of support arm portions (32), the base end portion being (24) supported by the pair of support arm portions (32) to be rotatable around a first axis line (X); and
a fixed component (4) that is configured to assemble a polar board (5) and a cover (6) in a direction of a second axis line (Y) perpendicular to the first axis line (X), the movable component (3) being supported to be rotatable around the second axis line (Y) in the fixed component (4), wherein
arc-shaped guide grooves (55) to surround the second axis line (Y) by a predetermined interval as viewed in the direction of the second axis line (Y) are provided respectively on opposing faces of each other of the polar board (5) and the cover (6), and
projections that engage to the guide groove (55) in the polar board (5) and the guide groove (55) in the cover (6) are provided in the pair of support arm portions (32).

2. The lever device according to claim 1, wherein
the base end portion (24) is provided with shaft-shaped projections that project along the first axis line (X) on both sides of the base end portion (24) in the direction of the first axis line,
the support arm portions (32) are respectively provided with support holes that rotatably support the shaft-shaped projections to penetrate through the support arm portions in the direction of the first axis line (X), and
the shaft-shaped projections are respectively provided with inclination faces (241a) in the insert side upon inserting the base end portion (24) in between the pair of support arm portions (32) to displace the pair of support arm portions in the direction of being away from each other in the direction of the first axis line (X).

3. The lever device according to claim 2, wherein
the operable knob (2) includes:
a tubular cover portion (21); and
a shaft member (23) which is connected to the cover portion (21) in the inside of the cover portion and a side of the base end portion (24) of which projects from the cover portion (12), and
the shaft-shaped projection is provided in a section in the base end portion (24), the section projecting from the cover portion (21).
